# EUROPEAN PATENT APPLICATION

(11) **EP 3 310 035 A2**
(43) Date of publication of application: **18.04.2018**
(21) Application number: 17184459.0
(22) Date of filing: 02.08.2017
(51) Int. Cl.: H04N 5/232

(54) **MOBILE TERMINAL AND METHOD FOR CONTROLLING THE SAME**

(30) Priority: 14.10.2016 KR 20160133410
(71) Applicant: LG Electronics Inc., Yeongdeungpo-gu SEOUL, 07336 (KR)
(72) Inventor: KIM, Yung, 06772 Seoul (KR); KWON, Arim, 06772 Seoul (KR); CHO, Taehoon, 06772 Seoul (KR); KIM, Changmok, 06772 Seoul (KR)
(74) Representative: Katérle, Axel

(57) **Abstract**

A mobile terminal includes a display unit, a sensing unit, and a controller. Tthe controller, if a camera application is executed, is configured to output a first camera preview and a general capturing button on the display unit, configured to determine at least one or more capturing options based on information on a subject included in the first camera preview and configured to control a variable capturing button to be outputted in a manner of being changed from the general capturing button based on the at least one or more determined capturing options.

## Description

### BACKGROUND OF THE INVENTION

### Field of the Invention

The present invention relates to a mobile terminal including a camera interface configured to provide an image to which an effect of a level preferred by a user is applied as a preview image and a method of controlling therefor.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

Meanwhile, when an image is captured using a mobile terminal, a user may intend to obtain a result of a level satisfied by the user by a single capture. In this case, the user may intend to capture an image by applying a configuration preferred by the user before an image is captured without performing retouching on the captured image. For example, when a camera application is executed in the mobile terminal, it may be necessary for the user to adjust such a detail value as white balance, autofocus and the like on a camera preview in real time. However, since the user is not a professional photographer, it may be difficult for the user to adjust the detail value for obtaining an optimized result in real time in an image preview state.

### SUMMARY OF THE INVENTION

An object of the present invention is to solve the aforementioned problem and a different problem. Another object of the present invention is to provide a mobile terminal capable of checking an optimized result in a preview state before an image is captured and capturing the image without separate retouching after the image is captured and a method of controlling therefor.

Another object of the present invention is to provide a mobile terminal capable of providing an image capturing mode suitable for a situation based on a current situation of the mobile terminal and a method of controlling therefor.

The other object of the present invention is to provide a mobile terminal enabling a user to conveniently use setting capable of being applied in a camera preview state by arranging the setting near a capturing button and a method of controlling therefor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment, a mobile terminal includes a display unit, a sensing unit, and a controller, the controller, if a camera application is executed, configured to output a first camera preview and a general capturing button on the display unit, the controller configured to determine at least one or more capturing options based on information on a subject included in the first camera preview, the controller configured to control a variable capturing button to be outputted in a manner of being changed from the general capturing button based on the at least one or more determined capturing options.

In another aspect of the present invention, the variable capturing button can include at least one or more option areas and the general capturing button and the at least one or more option areas can be deployed in a form of surrounding the general capturing button.

In another aspect of the present invention, the controller can output the variable capturing button including the at least one or more option areas in a manner of being changed from the general capturing button based on the at least one or more determined capturing options and the at least one or more option areas may correspond to the at least one or more determined capturing options.

In another aspect of the present invention, if a first input signal inputted on the variable capturing button is sensed, the controller can further capture an image corresponding to the first camera preview and the first input signal may correspond to a short-touch input.

In another aspect of the present invention, if a second input signal inputted on the variable capturing button is sensed, the controller can further capture at least one or more images that the at least one or more capturing options are applied to the first camera preview and the second input signal may correspond to a long-touch input.

In another aspect of the present invention, the at least one or more images may correspond to images to which the at least one or more capturing options are sequentially applied based on duration time of the second input signal.

In another aspect of the present invention, if the second input signal is released, the controller can further output the remaining option areas except the previously applied option area among the at least one or more option areas included in the variable capturing button and the general capturing button.

In another aspect of the present invention, if a third input signal inputted on the variable capturing button is sensed, the controller can further sequentially capture images that the at least one or more capturing options are respectively applied to the first camera preview and the third input signal may correspond to a press-touch input.

In another aspect of the present invention, if the image capturing is completed, the controller can further eliminate the variable capturing button from the display unit and output the general capturing button on the display unit.

In another aspect of the present invention, if a fourth input signal inputted on the at least one or more option areas is sensed, the controller can further output a second camera preview that a first capturing option is applied to the first camera preview.

In another aspect of the present invention, if the fourth input signal is released, the controller further opaquely output the variable capturing button.

In another aspect of the present invention, if a fifth input signal for switching to a default state is sensed in a state that the variable capturing button is outputted, the controller can further eliminate the variable capturing button from the display unit and output the general capturing button on the display unit.

In another aspect of the present invention, the variable capturing button can be outputted to an area at which the general capturing button is located based on at least one selected from the group consisting of the information on the subject contained in the first camera preview, movement information of the mobile terminal, and location information of the mobile terminal.

In another aspect of the present invention, a method of controlling a mobile terminal includes the steps of, if a camera application is executed, outputting a first camera preview and a general capturing button on a display unit, determining at least one or more capturing options based on information on a subject included in the first camera preview, and controlling a variable capturing button to be outputted in a manner of being changed from the general capturing button based on the at least one or more determined capturing options.

It is to be understood that both the foregoing general description and the following detailed description of the preferred embodiments of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure.
FIGS. 1B and 1C are conceptual views of one example of the mobile terminal, viewed from different directions.
FIG. 2 is a diagram for a different example of a mobile terminal, viewed from a rear side of the mobile terminal.
FIG. 3 is a block diagram for a mobile terminal according to one embodiment of the present invention.
FIG. 4 is a diagram for an example of providing a variable capturing button according to a situation in a camera preview of a mobile terminal according to one embodiment of the present invention.
FIG. 5 is a diagram for a different example of providing a variable capturing button according to a situation in a camera preview of a mobile terminal according to one embodiment of the present invention.
FIG. 6 is a diagram for a further different example of providing a variable capturing button according to a situation in a camera preview of a mobile terminal according to one embodiment of the present invention.
FIG. 7 is a diagram for a further different example of providing a variable capturing button according to a situation in a camera preview of a mobile terminal according to one embodiment of the present invention.
FIG. 8 is a diagram for a further different example of providing a variable capturing button according to a situation in a camera preview of a mobile terminal according to one embodiment of the present invention.
FIG. 9 is a diagram for a further different example of providing a variable capturing button according to a situation in a camera preview of a mobile terminal according to one embodiment of the present invention.
FIG. 10 is a diagram for a further different example of providing a variable capturing button according to a situation in a camera preview of a mobile terminal according to one embodiment of the present invention.
FIG. 11 is a diagram for a further different example of providing a variable capturing button according to a situation in a camera preview of a mobile terminal according to one embodiment of the present invention.
FIG. 12 is a diagram for an example of capturing an image when a general capturing button is outputted in a camera preview of a mobile terminal according to one embodiment of the present invention.
FIG. 13 is a diagram for a different example of capturing an image when a general capturing button is outputted in a camera preview of a mobile terminal according to one embodiment of the present invention.
FIG. 14 is a diagram for a further different example of capturing an image when a general capturing button is outputted in a camera preview of a mobile terminal according to one embodiment of the present invention.
FIG. 15 is a diagram for a further different example of capturing an image when a general capturing button is outputted in a camera preview of a mobile terminal according to one embodiment of the present invention.
FIG. 16 is a diagram for a further different example of capturing an image when a general capturing button is outputted in a camera preview of a mobile terminal according to one embodiment of the present invention.
FIG. 17 is a diagram for an example of providing a camera setting based on a situation sensed by a mobile terminal according to one embodiment of the present invention.
FIG. 18 is a diagram for a different example of providing a camera setting based on a situation sensed by a mobile terminal according to one embodiment of the present invention.
FIG. 19 is a diagram for a further different example of providing a camera setting based on a situation sensed by a mobile terminal according to one embodiment of the present invention.
FIG. 20 is a diagram for a further different example of providing a camera setting based on a situation sensed by a mobile terminal according to one embodiment of the present invention.
FIG. 21 is a diagram for a further different example of providing a camera setting based on a situation sensed by a mobile terminal according to one embodiment of the present invention.
FIG. 22 is a diagram for a further different example of providing a camera setting based on a situation sensed by a mobile terminal according to one embodiment of the present invention.
FIG. 23 is a diagram for a further different example of providing a camera setting based on a situation sensed by a mobile terminal according to one embodiment of the present invention.
FIG. 24 is a diagram for a further different example of providing a camera setting based on a situation sensed by a mobile terminal according to one embodiment of the present invention.
FIG. 25 is a diagram for a further different example of providing a camera setting based on a situation sensed by a mobile terminal according to one embodiment of the present invention.
FIG. 26 is a diagram for a further different example of providing a camera setting based on a situation sensed by a mobile terminal according to one embodiment of the present invention.
FIG. 27 is a diagram for a further different example of providing a camera setting based on a situation sensed by a mobile terminal according to one embodiment of the present invention.
FIG. 28 is a flowchart for a method of controlling a mobile terminal according to one embodiment of the present invention.
FIG. 29 is a flowchart for a method of controlling a mobile terminal according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

### [[US Only Start]]

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

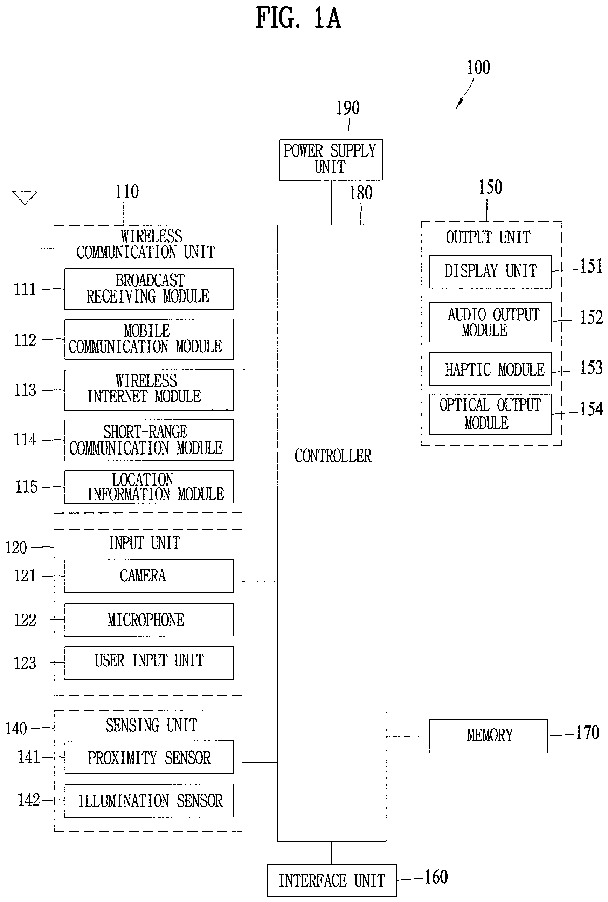

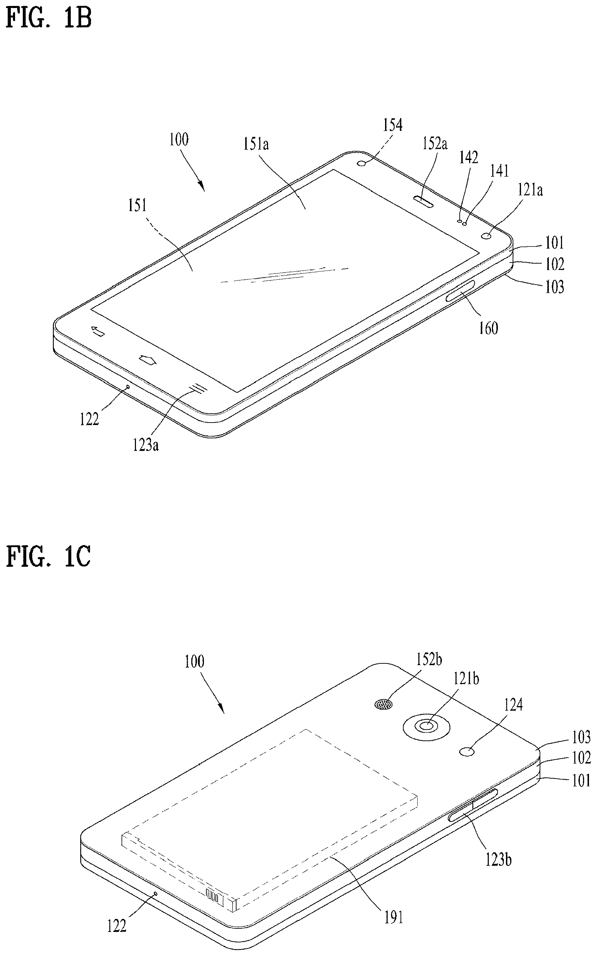

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or a function appropriate for a user in a manner of processing a signal, data, information and the like inputted or outputted via the aforementioned configuration elements or executing an application program stored in the memory 170.

The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least a part of the configuration elements can operate in a manner of cooperating with each other to implement an operation of a mobile terminal, control of the mobile terminal or a method of controlling the mobile terminal according to various embodiments described in the following. And, the operation of the mobile terminal, the control of the mobile terminal or the method of controlling the mobile terminal can be implemented on the mobile terminal by driving at least one or more application programs stored in the memory 170.

Referring still to FIG. 1A, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal.

In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 can include the display unit 151, the first and second audio output unit 152a/152b, the proximity sensor 141, the illumination sensor 142, the optical output unit 154, the first and second camera 121a/121b, the first and second operation unit 123a/123b, the microphone 122, the interface unit 160 and the like.

FIGS. 1B and 1C depict certain components as arranged on the mobile terminal.

However, it is to be understood that alternative arrangements are possible and within the teachings of the instant disclosure. Some components may be omitted or rearranged. For example, the first manipulation unit 123 a may be located on another surface of the terminal body, and the second audio output module 152b may be located on the side surface of the terminal body.

The display unit 151 outputs information processed in the mobile terminal 100. The display unit 151 may be implemented using one or more suitable display devices.

Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123 a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121 a. If desired, second camera 121 a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160.

Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Further preferred embodiments will be described in more detail with reference to additional drawing figures. It is understood by those skilled in the art that the present features can be embodied in several forms without departing from the characteristics thereof.

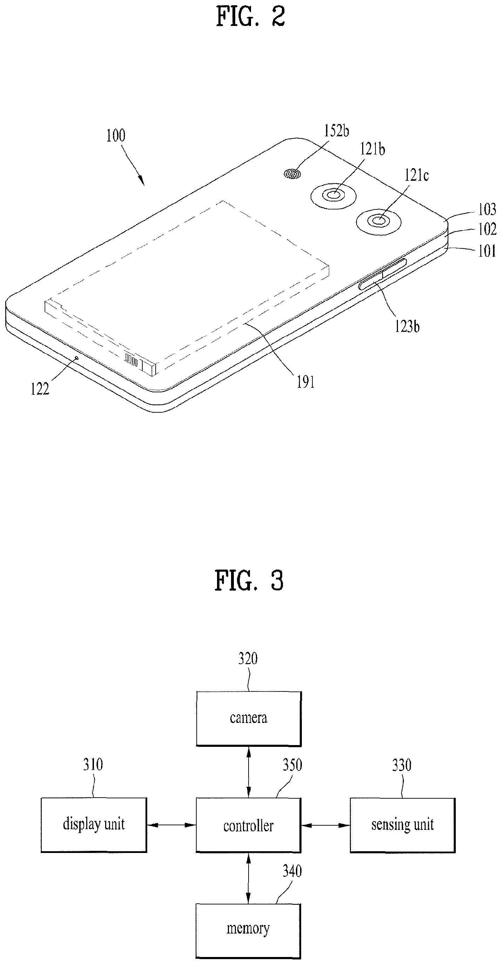

FIG. 2 is a diagram for a different example of a mobile terminal, viewed from a rear side of the mobile terminal.

As an embodiment of the present invention, a mobile terminal may include a second camera 121b and a third camera 121c on the rear side of the mobile terminal. When the second camera 121b corresponds to a general camera having a general capturing angle, assume that the third camera 121c corresponds to a wide angle camera having a capturing angle wider than the capturing angle of the second camera 121b.

A wide angle camera may correspond to a camera equipped with a wide-angle lens that a focal distance is significantly shorter than the general camera. Although the focal distance is considerably short, the wide angle camera can capture a relatively wide capturing angle. Hence, the wide angle camera may have such an effect as an image taken from a farthest location, thereby having higher utilization.

As shown in the drawing, the second camera 121b and the third camera 121c can be deployed in a manner of being adjacent to one side of the mobile terminal 100. Although FIG. 2 shows an example that the second camera 121b and the third camera 121c are deployed to the rear side of the mobile terminal 100, the general camera and the wide angle camera can be deployed to the front side of the mobile terminal in a manner of being adjacent to each other. Or, the general camera and the wide angle camera can be respectively deployed to the front side and the rear side of the mobile terminal in a manner of being adjacent to each other.

If images are received from the general camera and the wide angle camera, which are deployed in a manner of being adjacent to each other, a part of the images can be overlapped with each other or one image can be included in another image. One embodiment of the present invention explains a case that a general image received via the general camera is included in a wide angle image received via the wide angle camera as an example, by which the present invention may be non-limited. The present invention can also be applied to a case that a part of images is overlapped only.

One embodiment of the present invention intends to propose a control method capable of utilizing each of the cameras when the general camera and the wide angle camera are deployed in a manner of being adjacent to each other.

FIG. 3 is a block diagram for a mobile terminal according to one embodiment of the present invention.

According to the present invention, a mobile terminal can include a display unit 310, a camera 320, a sensing unit 330, a memory 340, and a controller 350. And, a configuration module installed in the mobile terminal is not restricted by the aforementioned modules and may further include various configuration modules.

The display unit 310 can display visual information. In this case, the visual information can include content, an application, an image, a video, an icon, and the like. And, the display unit 310 can display information processed in the mobile terminal. For example, the display unit 310 basically outputs various images and text information and may be able to display UI (user interface) and GUI (graphic user interface) according to information on an execution screen of an application program executed in the mobile terminal. And, the display unit 310 can output the visual information on a screen based on a control command of the controller 350.

In the present invention, the display unit 310 can be implemented by the display unit 151 shown in FIG. 1a. In the present invention, the display unit 310 can be implemented in a touch screen form together with the sensing unit 330. According to one embodiment of the present invention, the display unit 310 can output a camera preview.

The camera 320 can sense an object or a subject within a viewing angle area. As one embodiment, the camera 320 of the present invention can be implemented by the camera 121 of FIG. 1a. As a different embodiment, the camera 320 of the present invention can be implemented by the camera 121b/121c of FIG. 2. For example, one of a plurality of cameras corresponds to a general camera having a general angle of view and another one may correspond to a wide angle camera having a wide angle of view. According to one embodiment of the present invention, the camera 320 can sense a subject within an angle of view area using at least one of the general camera and the wide angle camera.

The sensing unit 220 senses various inputs of a user inputted on a mobile terminal and environment of the mobile terminal and delivers a sensed result to the controller 340 to enable the controller 340 to perform an operation according to the sensed result. In the present invention, the sensing unit 330 can be implemented by the sensing unit 140 or the input unit 120 shown in FIG. 1a. According to one embodiment of the present invention, the sensing unit 330 can sense a direct touch and a proximity touch (e.g., hovering) via touch recognition of a capacitive type. For example, the sensing unit 330 can sense a point corresponding to an object vertically located within 5 cm from the display unit 310.

And, in case of sensing a proximity touch and a direct touch, the sensing unit 330 can sense not only a point corresponding to a single input but also points corresponding to a plurality of inputs. According to one embodiment of the present invention, a mobile terminal equipped with a touch sensor can sense various direct touches including a short touch, a long touch, a drag touch, and the like. According to one embodiment of the present invention, the sensing unit 330 can sense location information of the mobile terminal or a touch input.

The memory 340 can store data related to operations performed in the mobile terminal. For example, the memory 340 can include not only a storing medium installed in the mobile terminal but also a storing medium installed in the exterior of the mobile terminal. In the present invention, the memory 340 can be implemented by the memory 170 of FIG. 1a. According to one embodiment of the present invention, if an image is captured by a camera application, the memory 340 can store the captured image.

The controller 350 processes data, controls the aforementioned units of the mobile terminal, and controls data transmission/reception between units. In the present invention, the controller 350 can be implemented by the controller 180 of FIG. 1a. According to one embodiment of the present invention, the controller 350 can determine at least one or more capturing options based on subject information included in a camera preview. For example, the controller 350 can analyze an image capture pattern of a user using big data. Based on this, the controller 350 can determine at least one or more capturing options based on the subject information and the image capture pattern.

As one embodiment of the present invention, operations performed by the mobile terminal can be controlled by the controller 350. Yet, for clarity, assume that the operations are commonly performed by the mobile terminal in the following drawings and description.

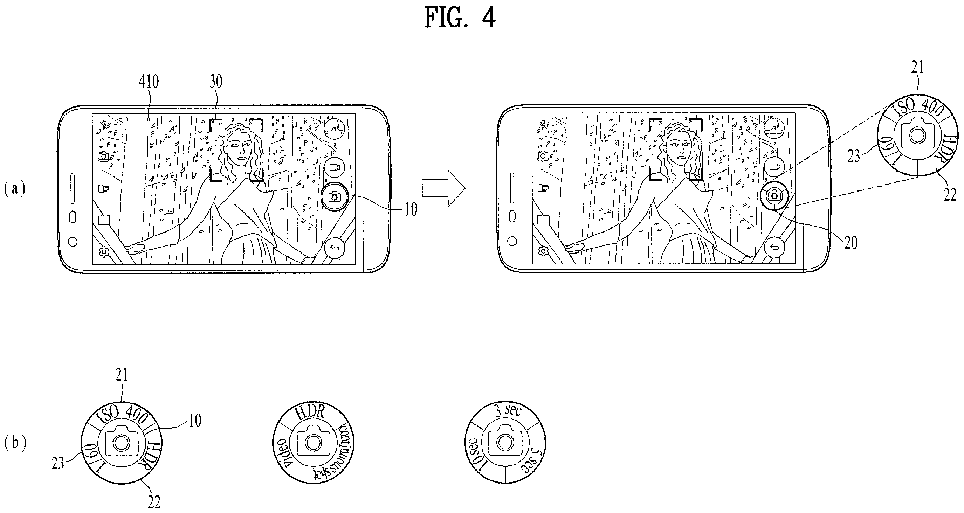

In the following, a method of providing various capturing modes is explained through embodiments of FIGS. 4 to 29 based on a situation that the mobile terminal intends to capture a current image when a camera application is executed.

Output variable capturing button based on subject information

FIG. 4 is a diagram for an example of providing a variable capturing button according to a situation in a camera preview of a mobile terminal according to one embodiment of the present invention.

Referring to FIG. 4 (a), if a camera application is executed, the mobile terminal can output a camera preview 410. In this case, the camera preview 410 may correspond to at least a part of an image sensed within an angle of view area of a camera installed in the mobile terminal.

And, the mobile terminal can control the camera preview 410 and a general capturing button 10 to be outputted at the same time. For example, the general capturing button 10 can be outputted in a manner of being overlaid on the camera preview 410 or can be outputted in a position separated from the camera preview 410. And, the general capturing button 10 may correspond to a button basically outputted to capture an image. The mobile terminal sets a focus area among the camera preview 410 according to a user setting or a terminal setting and may be able to output a focus indicator 30. In this case, the focus area corresponds to an area where a user intends to take a good picture within an angle of view area.

Meanwhile, the mobile terminal recognizes a subject sensed in the angle of view area and may be able to determine at least one or more capturing options for taking a better picture of the subject. For example, the at least one or more capturing options may correspond to various camera settings including HDR, close-up, shutter speed, and the like. And, referring to FIG. 4 (b), the mobile terminal can output a variable capturing button 20 changed from the general capturing button based on the determined at least one or more capturing options. For example, the variable capturing button 20 can be outputted in a manner of being changed within a predetermined time after the camera preview and the capturing button 10 are outputted. And, the variable capturing button 20 can be outputted only when a setting value for representing a subject well exists.

In the present invention, the variable capturing button 20 corresponds to a button on which an effect appropriate for a focus area set-subject is outputted near the general capturing button 10 through texts. And, the variable capturing button 20 may include the general capturing button 10 at the center of the variable capturing button and may have at least one or more option areas surrounding the general capturing button 10. In this case, the at least one or more option areas correspond to areas for indicating the one or more capturing options determined by the mobile terminal. For example, as shown in the second drawing of FIG. 4 (a), if there are 3 effects appropriate for a subject, the variable capturing button 20 can output 3 option areas 21/22/23 around the general capturing button 10.

As an example, referring to the first drawing of FIG. 4 (b), the variable capturing button 20 can include an option area including HDR function, 1/60 sec, and ISO 400 mode. As a different example, referring to the second drawing of FIG. 4 (b), the variable capturing button 20 can include an option area including continuous shot, video, and HDR mode. And, as a further different example, referring to the third drawing of FIG. 4 (b), the variable capturing button 20 can include an option area of a timer mode including 3 sec, 5 sec, and 10 sec. A function provided to the variable capturing button 20 is not restricted by the aforementioned examples. The function can be provided in various ways based on a status of a subject outputted on the camera preview 410.

Therefore, a user can easily anticipate effects for capturing a best picture of a subject outputted on the current preview image through setting areas 21/22/23 included in the variable capturing button.

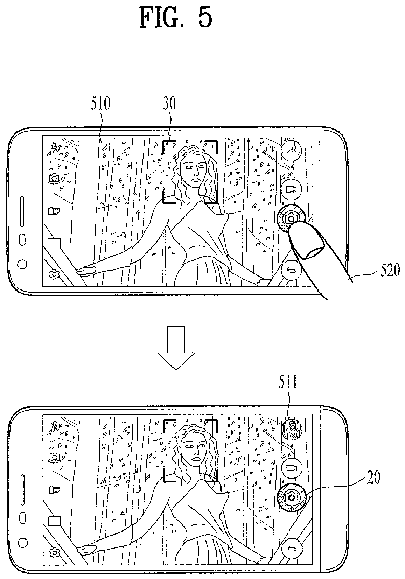

FIG. 5 is a diagram for a different example of providing a variable capturing button according to a situation in a camera preview of a mobile terminal according to one embodiment of the present invention.

More specifically, an embodiment of FIG. 5 shows a method of capturing an image according to a short-touch input when a variable capturing button is provided in a camera preview status. And, explanation on contents overlapped with the aforementioned contents of FIG. 4 is omitted in the embodiment of FIG. 5.

Referring to the first drawing of FIG. 5, as mentioned earlier in FIG. 4, the mobile terminal can output the camera preview 510 and the variable capturing button 20. And, the mobile terminal can sense an input signal 520 inputted on the variable capturing button 20. In this case, the input signal 520 may correspond to a short-touch input. And, the input signal 520 may correspond to an intention of a user intending to capture an image without applying a setting provided by the variable capturing button 20.

In this case, the mobile terminal can capture an image corresponding to an image outputted on the camera preview 510. And, as shown in the second drawing of FIG. 5, the mobile terminal can output the camera preview again after the image is captured. In this case, the mobile terminal can output a thumbnail 511 at a side of the display unit to check the captured image.

And, referring to the second drawing of FIG. 5, the mobile terminal can continuously output the camera preview 510 and the variable capturing button 20. This is because, since a user did not select a setting area included in the variable capturing button at the time of capturing the image, it is designed to indicate that application of the setting included in the variable capturing button 20 is available.

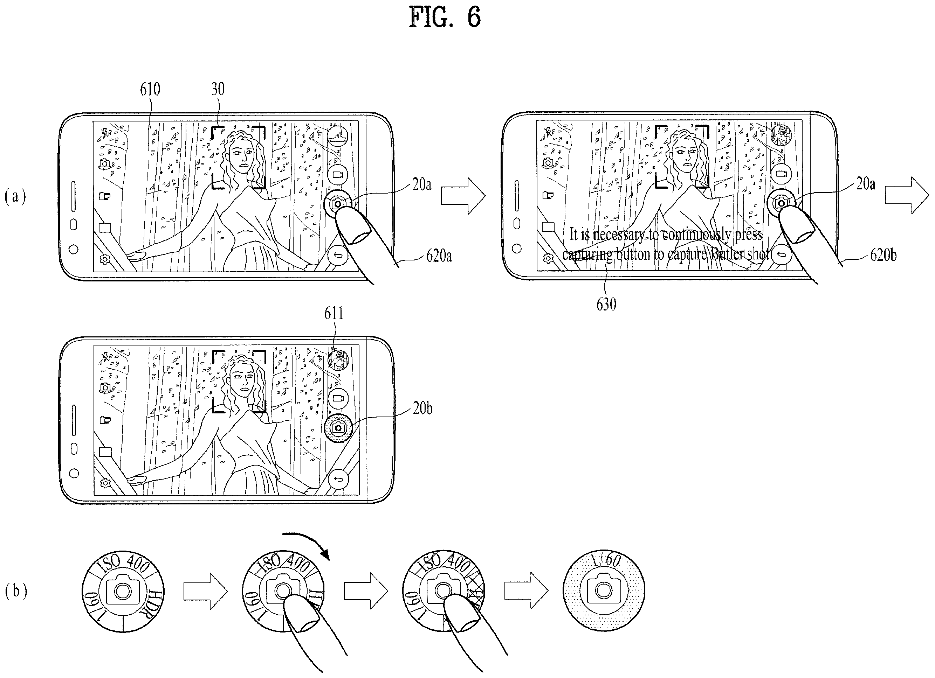

FIG. 6 is a diagram for a further different example of providing a variable capturing button according to a situation in a camera preview of a mobile terminal according to one embodiment of the present invention.

More specifically, an embodiment of FIG. 6 shows a method of capturing an image according to a long-touch input when a variable capturing button is provided in a camera preview status. And, explanation on contents overlapped with the aforementioned contents of FIG. 4 is omitted in the embodiment of FIG. 6.

Referring to the first drawing of FIG. 6, as mentioned earlier in FIG. 4, the mobile terminal can output the camera preview 610 and the variable capturing button 20. And, the mobile terminal can sense a first input signal 620a inputted on the variable capturing button 20. In this case, the first input signal 620a may correspond to a short-touch input. Yet, in the embodiment of FIG. 6, a finger of a user can maintain the touch after the first input signal 620a is sensed.

In this case, referring to the second drawing of FIG. 6 (a), the mobile terminal can output a guide indicator 630 on the display unit in response to the first input signal 620a. The guide indicator 630 can indicate an image capable of being captured according to an input signal inputted on the capturing button in a text form.

And, the mobile terminal can sense a second input signal 620b right after the first input signal 620a. In this case, the first input signal 620a and the second input signal 620b correspond to continuous input signals. For example, if a user touches the capturing button using a finger of the user for a predetermined time or less, the mobile terminal recognizes the touch as the first input signal 620a and can control the guide indicator 630 to be outputted. And, if the user touches the capturing button for more than the predetermined time, the mobile terminal recognizes the touch as the second input signal 620b and can control image capturing to be performed.

In relation to this, referring to the second drawing of FIG. 6 (a), the mobile terminal can capture an image to which a setting included in the variable capturing button 20 is applied in response to the second input signal 620b.

Regarding this, it is explained in detail with reference to FIG. 6 (b) in the following.

Referring to the first drawing of FIG. 6 (b), the variable capturing button 20 is in a default state before an input signal is sensed. Hence, a graphic effect of an option area near the capturing button 10 can be identically outputted. And, the second drawing of FIG. 6 (b) shows a state that an input signal is sensed on the variable capturing button 20 for first time and the state may correspond to a state that an image to which a first capturing option is applied is captured. In particular, the state may correspond to a state that a progress bar has moved to a first option area on an option area shown in FIG. 6 (b). And, the third drawing of FIG. 6 (b) shows a state that an input signal is sensed on the variable capturing button 20 for second time and the state may correspond to a state that an image to which a second capturing option is applied is captured after the image to which the first option is applied is captured. In particular, the state may correspond to a state that a progress bar has moved to a second option area on an option area shown in FIG. 6 (b). Lastly, the fourth drawing of FIG. 6 (b) shows a state that an input signal is released from the variable capturing button 20. In this case, the first capturing option and the second capturing option, which are already applied to the captured image, are excluded from the variable capturing button and a third option area can be outputted only on the variable capturing button.

Referring to the third drawing of FIG. 6 (a), if an input signal 520 is released, the mobile terminal outputs a thumbnail 611 indicating a recently captured image and may be able to output the camera preview and the variable capturing button 20. In this case, the variable capturing button 20b may correspond to the variable capturing button shown in FIG. 6 (b). In particular, if a user releases a finger of the user from the variable capturing button, a previously captured effect disappears and a capturing option not captured yet may appear on the capturing button only.

In this case, although it is not depicted in FIG. 6, if a long-touch input is additionally sensed on the variable capturing button, an image to which the remained capturing option is applied can be captured.

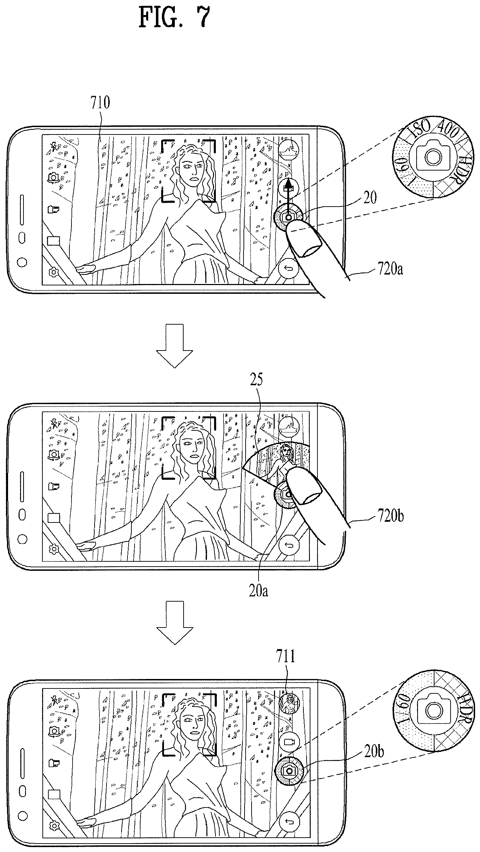

FIG. 7 is a diagram for a further different example of providing a variable capturing button according to a situation in a camera preview of a mobile terminal according to one embodiment of the present invention.

More specifically, an embodiment of FIG. 7 shows a method of checking a preview of an image to which a setting is applied according to an input signal when a variable capturing button is provided in a camera preview status. And, explanation on contents overlapped with the aforementioned contents of FIG. 4 is omitted in the embodiment of FIG. 7.

Referring to the first drawing of FIG. 7, as mentioned earlier in FIG. 4, the mobile terminal can output the camera preview 710 and the variable capturing button 20. And, the mobile terminal can sense a first input signal 720a inputted on the variable capturing button 20. In this case, the input signal may correspond to a drag touch input. In an embodiment of FIG. 7, the input signal 720 may correspond to a drag touch moving in a direction of a first option from a position of a general capturing button 10 among the variable capturing button 20. Specifically, the first input signal 720a may indicate an intention of a user intending to check a preview of an image to which a setting preferred by the user is applied among settings provided by the variable capturing button.

In this case, as shown in the second drawing of FIG. 7, the mobile terminal can control a preview 25 of a first option to be outputted at an area adjacent to a first setting of the variable capturing button 20a in response to the first input signal 720a.

In this case, the mobile terminal can capture an image in a state that the preview is outputted. As an example, the mobile terminal can sense that the first input signal 720a is released from the preview 25. And, if the first input signal 720a is released, the mobile terminal can capture an image checked via the preview 25 of the first option. As a different example, as shown in the second drawing of FIG. 7, the mobile terminal can sense a second input signal 720b inputted on the preview 25. For example, the second input signal 720b may correspond to a short-touch input. In this case, the mobile terminal can capture an image corresponding to the preview 25.

As shown in the third drawing of FIG. 7, the mobile terminal can control a camera preview and a variable capturing button 20b to be outputted after the image is captured. In this case, the variable capturing button 20b can include the remaining options only except the previously applied options among the at least one or more options originally included in the variable capturing button.

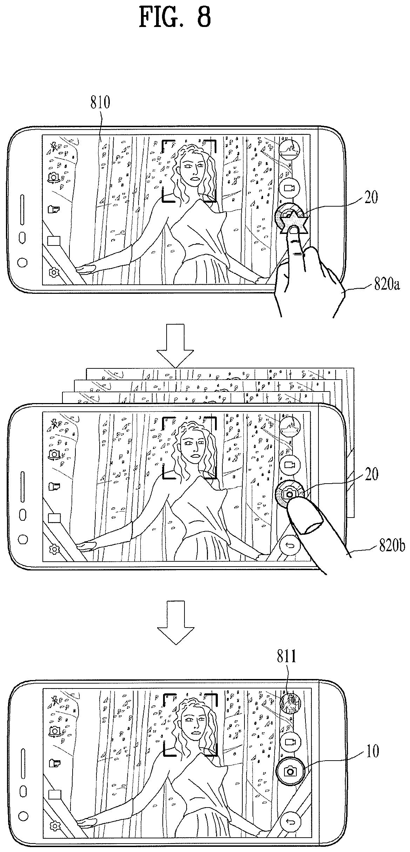

FIG. 8 is a diagram for a further different example of providing a variable capturing button according to a situation in a camera preview of a mobile terminal according to one embodiment of the present invention.

More specifically, FIG. 8 shows a method of capturing an image according to an input signal of which a pressure or an area is different when a variable capturing button is provided in a camera preview status. And, explanation on contents overlapped with the aforementioned contents of FIG. 4 is omitted in the embodiment of FIG. 8.

Referring to the first drawing of FIG. 8, as mentioned earlier in FIG. 4, the mobile terminal can output the camera preview 810 and the variable capturing button 20. And, the mobile terminal can sense an input signal 820 inputted on the variable capturing button 20. In this case, the input signal 820 may correspond to a press touch input. For example, the press touch input may correspond to a touch input when at least one of a touch pressure sensed via the sensing unit and an area sensed on the display unit exceeds a predetermined level.

In this case, referring to the second drawing of FIG. 8, the mobile terminal can continuously capture a plurality of images in response to the input signal 820. In this case, the captured images may correspond to images to which a plurality of options included in the variable capturing button 20 are sequentially applied. In this case, while a plurality of the images are continuously captured, a progress bar may move on a plurality of the settings included in the variable capturing button 20 to indicate that options are applied.

Subsequently, referring to the third drawing of FIG. 8, if the image capturing is completed, the mobile terminal can output a camera preview and a general capturing button 10. In particular, when the images are captured, if all settings included in the variable capturing button 20 are applied, the mobile terminal can control the general capturing button to be outputted again.

Meanwhile, although the input signals mentioned earlier in FIGS. 5, 6, and 8 are respectively explained as a short-touch input, a long-touch input, and a press touch input, it is apparent that each of the embodiments is not restricted by the aforementioned input signal. In particular, if each of the sensed input signals is different from each other in the embodiments of FIGS. 5, 6 and 8, it is O.K. The present invention is not restricted by a type of the aforementioned touch input.

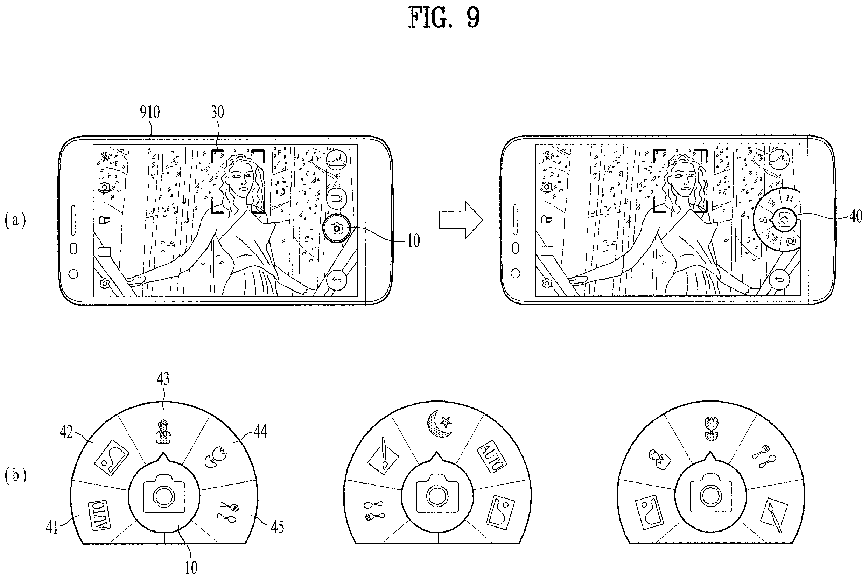

FIG. 9 is a diagram for a further different example of providing a variable capturing button according to a situation in a camera preview of a mobile terminal according to one embodiment of the present invention.

More specifically, an embodiment of FIG. 9 explains an example of a variable capturing button having a form different from a form of the variable capturing button mentioned earlier in FIG. 4. Explanation on contents overlapped with the aforementioned contents of FIG. 4 is omitted in the embodiment of FIG. 9.

Referring to the first drawing of FIG. 9 (a), the mobile terminal can output a camera preview 910 when a camera application is executed. And, the mobile terminal can control the camera preview 910 and a general capturing button 10 to be outputted at the same time.

Meanwhile, the mobile terminal recognizes a subject sensed in an angle of view area and may be then able to determine at least one or more capturing options for taking a good picture of the subject. And, referring to the second drawing of FIG. 9 (a), the mobile terminal can output a variable capturing button 40 changed from a general capturing button 10 based on a determined capturing mode or a detail setting value. For example, the variable capturing button 40 can be outputted within a predetermined time after the camera preview and the capturing button 10 are outputted.

Referring to FIG. 9 (b), the variable capturing button 40 may correspond to a button on which at least one or more capturing options for taking a good picture of a subject or characteristic of background are outputted in the vicinity of the general capturing button 10 through graphic. And, among the at least one or more capturing options, a best recommended option can be outputted at the center area 43 of the variable capturing button. For example, as shown in the second drawing of FIG. 9 (a), if there are 5 effects appropriate for the camera preview, the variable capturing button 40 can output 5 setting areas 41/42/43/44/45 around the general capturing button 10. Yet, the number of the setting areas may vary depending on a status of the camera preview or a type of the camera preview.

As an example, referring to the first drawing of FIG. 9 (b), the variable capturing button 40 can provide such an effect as white balance, HDR, and the like optimized to the current illumination in a situation mainly focusing a person. As a different example, referring to the second drawing of FIG. 9 (b), the variable capturing button 40 can be provided with such a setting value as high ISO, long shutter speed, and the like in a situation of night. And, as a further different example, referring to the third drawing of FIG. 9 (b), the variable capturing button 40 may change a setting value mainly based on a minimum focal distance in a situation of close-up shot. A variable capturing area shown in FIG. 9 is just an embodiment only. Hence, it is apparent that the present invention is not restricted by the embodiment.

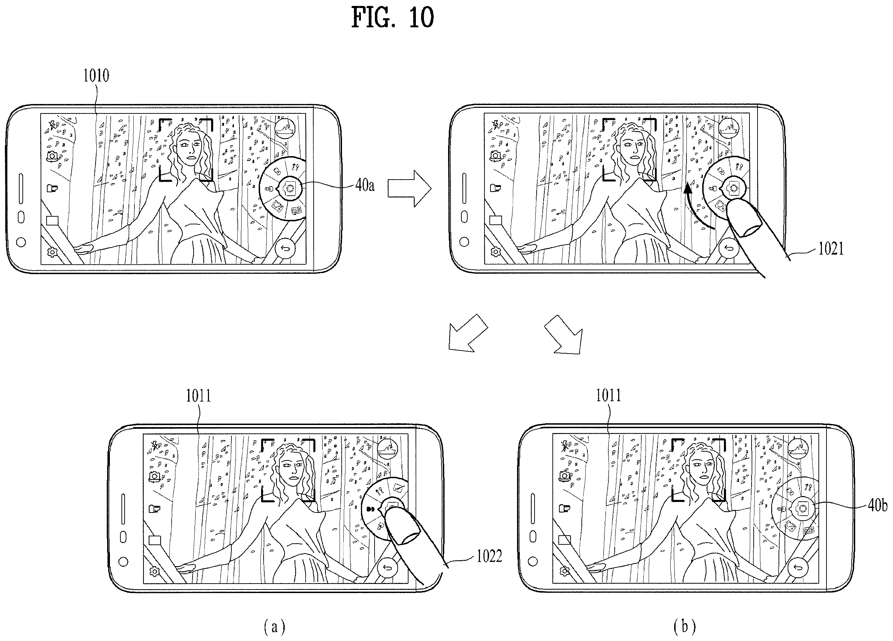

FIG. 10 is a diagram for a further different example of providing a variable capturing button according to a situation in a camera preview of a mobile terminal according to one embodiment of the present invention.

More specifically, an embodiment of FIG. 10 shows a method of providing a preview image of various settings according to an input signal when a variable capturing button is provided in a camera preview status. And, explanation on contents overlapped with the aforementioned contents of FIG. 9 is omitted in the embodiment of FIG. 10.

Referring to the first drawing of FIG. 10, as mentioned earlier in FIG. 9, the mobile terminal can control a first camera preview 1010 and a variable capturing button 40a to be outputted. According to the embodiment of FIG. 10, if a person subject is recognized on the first camera preview 1010, the mobile terminal can output the variable capturing button 40a to recommend a setting optimized for capturing a person. Yet, in this case, a user may intend to take a picture of a different image rather than the person appeared on the camera preview.

In this case, referring to the second drawing of FIG. 10, the mobile terminal can sense a first input signal 1021 inputted on a setting area of the variable capturing button 40. In this case, the first input signal 1021 may correspond to a drag touch input inputted on the setting area. In particular, the first input signal 1021 may correspond to an input for rotating at least one or more option areas adjacent to a general capturing button and changing a setting to a setting preferred by a user.

As an example, referring to FIG. 10 (a), the mobile terminal can output a second camera preview 1011 and a variable capturing button 40a based on the changed setting in response to the first input signal 1021. In this case, the second camera preview 1011 may correspond to a preview image that a capturing option selected by a user is applied to the first camera preview 1011. And, the mobile terminal can sense a second input signal 1022 inputted on the general capturing button 10. In this case, the second input signal may correspond to a short-touch input. In this case, although it is not depicted in FIG. 10, the mobile terminal can capture and store an image corresponding to the second camera preview.

As a different example, referring to FIG. 10 (b), the mobile terminal can sense a state that the first input signal 1021 is released. In this case, the mobile terminal can opaquely output the variable capturing button 40 while outputting the second camera preview 1011 based on a changed capturing option. For example, if an input signal is released, the mobile terminal outputs the variable capturing button 40a, which is outputted in a manner of being overlaid on the camera preview, with opacity of about 10 % to make a user easily check the camera preview to which a setting is applied.

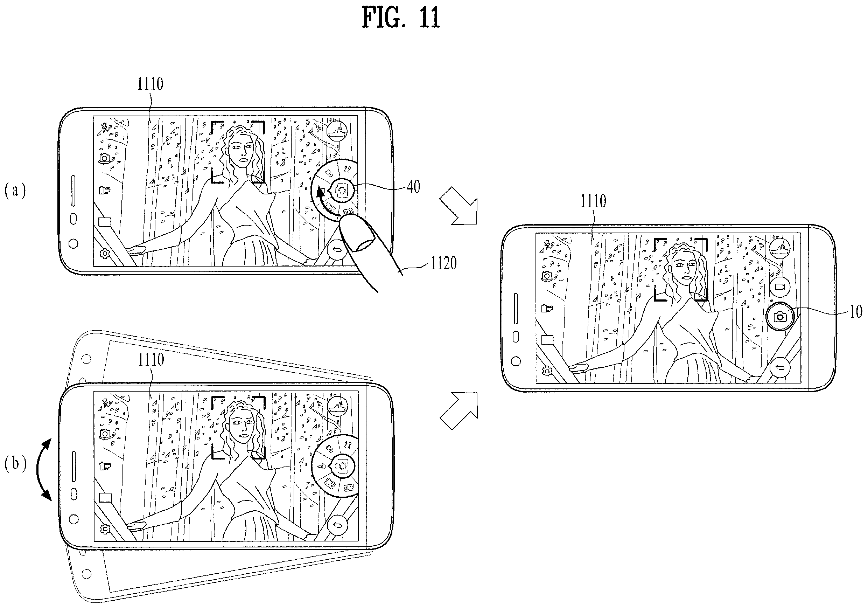

FIG. 11 is a diagram for a further different example of providing a variable capturing button according to a situation in a camera preview of a mobile terminal according to one embodiment of the present invention.

More specifically, an embodiment of FIG. 11 shows a method of outputting a general capturing button again when a variable capturing button is outputted in a camera preview status. And, explanation on contents overlapped with the aforementioned contents of FIG. 9 is omitted in the embodiment of FIG. 11.

As an example, referring to FIG. 11 (a), as mentioned earlier in FIG. 9, the mobile terminal can output a first camera preview 1110 and a variable capturing button 40. In this case, the first camera preview 1110 may correspond to a preview image that a capturing option is set to the basic camera preview mentioned earlier in FIG. 10. And, the mobile terminal can sense a first input signal 1120 inputted on the variable capturing button 40. In this case, the first input signal 1120 may correspond to a rotation drag touch inputted on a plurality of option areas included in the variable capturing button 40. And, the first input signal 1120 may correspond to a drag touch for changing to AUTO setting among a plurality of the option areas. For example, the AUTO setting may correspond to a setting applied as a default when a camera application is executed in the mobile terminal.

In this case, the mobile terminal eliminates the variable capturing button 40 in which a plurality of the option areas are included in response to the first input signal 1120 and may be able to output a general capturing button 10. And, as shown in the last drawing of FIG. 11, the mobile terminal can control a second camera preview 1111 corresponding to a basic preview image to be outputted instead of the first camera preview 1110 in response to the first input signal 1120. In this case, the second camera preview 1111 may correspond to a preview image that no capturing option is applied to an image sensed on an angle of view area of a camera installed in the mobile terminal.

As a different example, referring to FIG. 11 (b), the mobile terminal can output a camera preview to which a portrait mode is applied and a variable capturing button 40. In this case, a user may intend to apply a basic mode of a camera application rather than the portrait mode of the mobile terminal. In this case, the mobile terminal can sense a gesture input that a camera sways side to side. The mobile terminal eliminates the variable capturing button 40 in which a plurality of settings are included in response to the first input signal 1120 and can output a general capturing button 10. In relation to this, it may be able to identically apply the case mentioned earlier in FIG. 11 (a).

Recommend setting in a state that general playback button is outputted

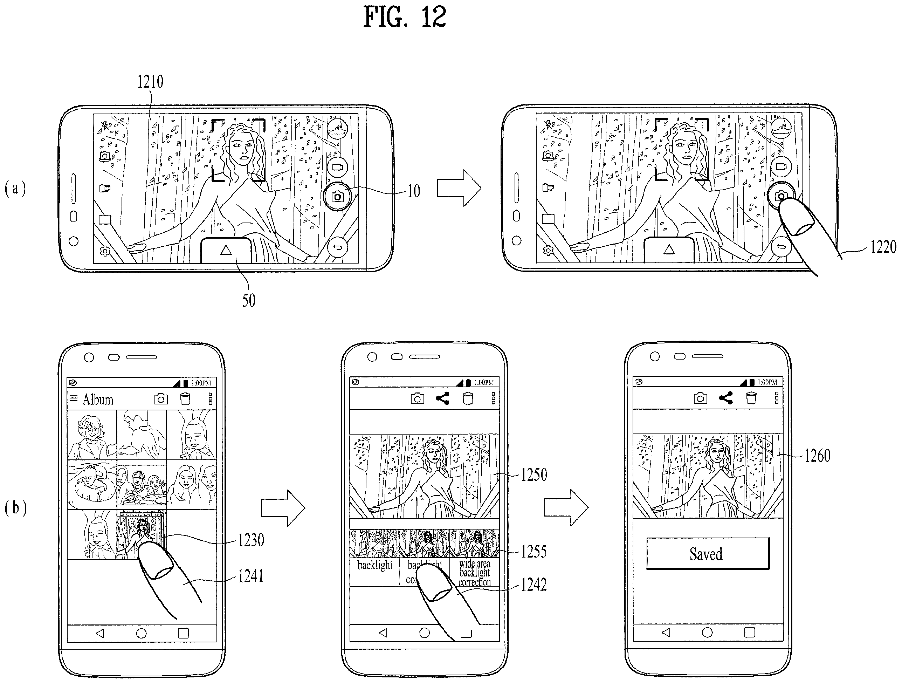

As mentioned earlier in the embodiments of FIGS. 4 to 11, if a setting capable of being recommended to a preview image is determined, the mobile terminal changes a capturing button itself and shows the changed the capturing button to a user. Unlike the aforementioned embodiments, embodiments of outputting a recommended capturing option on a camera preview with a different type without changing a capturing button are explained in the following with reference to FIGS. 12 to 16.

FIG. 12 is a diagram for an example of capturing an image when a general capturing button is outputted in a camera preview of a mobile terminal according to one embodiment of the present invention.

First of all, referring to the first drawing of FIG. 12 (a), if a camera application is executed, the mobile terminal can output a camera preview 1210 and a general capturing button 10. And, the mobile terminal can extract or analyze a capturing option capable of being applied to a subject sensed in an angle of view area. And, the mobile terminal can output a setting cue 50 on the display unit to make a user induce at least one or more capturing options capable of being applied. The setting cue 50 does not directly indicate a setting item. The setting cue corresponds to an indicator for applying a setting item by making a user sense an input signal. And, the setting cue 50 can be outputted only when an applicable capturing option exists after a situation of a current preview image is determined.

Subsequently, referring to the second drawing of FIG. 12 (a), the mobile terminal can sense an input signal 1220 inputted on the general capturing button 10. In particular, although the mobile terminal has indicated that the mobile terminal is able to change a capturing option through the setting cue 50, the mobile terminal can sense the input signal inputted on the general capturing button 10. In this case, as an example, the mobile terminal can sequentially capture images to which at least one or more capturing options are applied and store the images. In this case, the stored images can include not only the image to which the at least one or more capturing options are applied but also a default image correspondent to the camera preview 1210. And, as a different example, the mobile terminal captures an image to which the at least one or more capturing options are not applied and may be then able to apply a setting item to the captured image through retouching.

Meanwhile, when an image is captured, the mobile terminal stores the captured image in the memory. And, the mobile terminal can output the captured image through a gallery application. Referring to the first drawing of FIG. 12 (b), the mobile terminal can output a list of thumbnails of captured images when the gallery application executed. In this case, as mentioned in the foregoing description, when a general image is captured in a preview state capable of applying a capturing option, the mobile terminal can capture a plurality of images to which each capturing option is applied with fast speed.

In this case, when at least one or more capturing options are applied to images among the list of thumbnails, the mobile terminal can output an indicator 1230 to indicate that a plurality of images are captured. And, a thumbnail image of the indicator may correspond to a general image to which a capturing option is not applied. And, the mobile terminal can sense a first input signal 1241 inputted on the indicator 1230. In this case, as shown in the second drawing of FIG. 12 (b), the mobile terminal can output a magnified view 1250 of an image to which a capturing option is not applied. And, the mobile terminal can output a list of option setting images 1255 at the bottom of the magnified view 1250. More specifically, the list of option setting images 1255 may correspond to a list of captured images that at least one or more capturing options are respectively applied to the camera preview 1210.

And, the mobile terminal can sense a second input signal 1242 inputted on an image among the list of the option setting images 1255. In this case, as shown in the third drawing of FIG. 12 (b), an option setting image 40 on which the second input signal 1242 is sensed can be extracted from a plurality of images and stored. In this case, the remaining option setting images which are not extracted from a plurality of the images can be deleted from the mobile terminal.

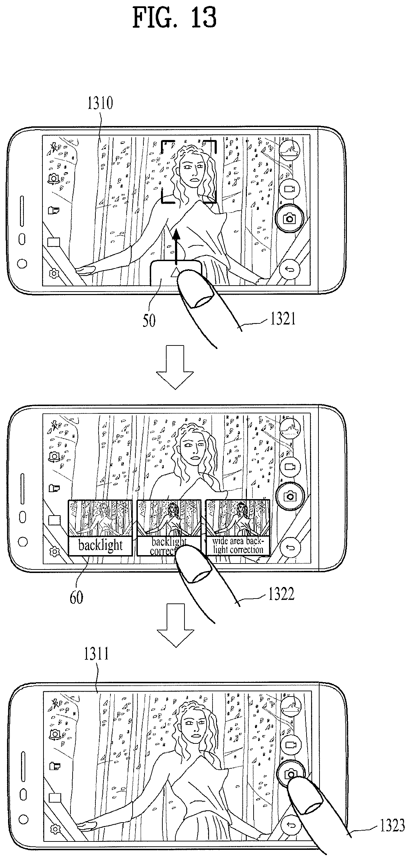

FIG. 13 is a diagram for a different example of capturing an image when a general capturing button is outputted in a camera preview of a mobile terminal according to one embodiment of the present invention.

More specifically, an embodiment of FIG. 13 shows a case that an image is captured based on a capturing option recommended by the mobile terminal when a subject included in a camera preview gets backlight. Explanation on contents overlapped with the aforementioned contents of FIG. 12 is omitted in the embodiment of FIG. 13.

First of all, referring to the first drawing of FIG. 13, the mobile terminal can output a first camera preview 1310 and a general capturing button 10. And, the mobile terminal can output a setting cue 50 at one side of the first camera preview 1310. In this case, the setting cue 50 can be outputted on the display unit only when a capturing option appropriate for a subject to which a focus area is set is provided.

And, the mobile terminal can sense a first input signal 1321 inputted on the setting cue 50. For example, the first input signal 1321 may correspond to a drag touch input or a flicking touch input which is inputted in one direction to check a setting item correspondent to the setting cue 50.

In this case, as shown in the second drawing of FIG. 13, the mobile terminal can output a list of setting items 60 at one area of the first camera preview 1310. For example, the list of setting items 60 can be outputted at the bottom of the first camera preview 1310, by which the present invention may be non-limited. And, in the embodiment of FIG. 13, the list of setting items 60 may recommend a setting item capable of securing amount of light of a subject as much as possible when the subject to which a focus area is set gets backlight. In this case, a plurality of items included in the list of setting items 60 can be listed on the list according to priority in a manner that image retouching frequently used by a user and a capturing value are extracted based on big data.

And, the mobile terminal can sense a second input signal 1322 inputted on one setting item among the list of setting items 60. For example, the second input signal 1322 may correspond to a short-touch input. In this case, as shown in the third drawing of FIG. 13, the mobile terminal can output a second camera preview 1311. In this case, the second camera preview 1311 may correspond to a preview image that a setting item selected by a user is reflected to the first camera preview 1310. By doing so, a user can anticipate an image to which a setting item is reflected in advance before the image is captured.

And, the mobile terminal can sense a third input signal 1323 inputted on the general capturing button 10 in a state that the second camera preview 1311 is outputted. In this case, the mobile terminal can capture and store an image corresponding to the second camera preview 1311.

In particular, according to the aforementioned embodiment, when an image is captured, although a user does not apply a plurality of setting values to the captured image via retouching, it may be able to provide a backlit picture of high quality by changing a setting value via capturing preprocessing. And, if a setting value is changed via capturing preprocessing, it may prevent image quality from being damaged.

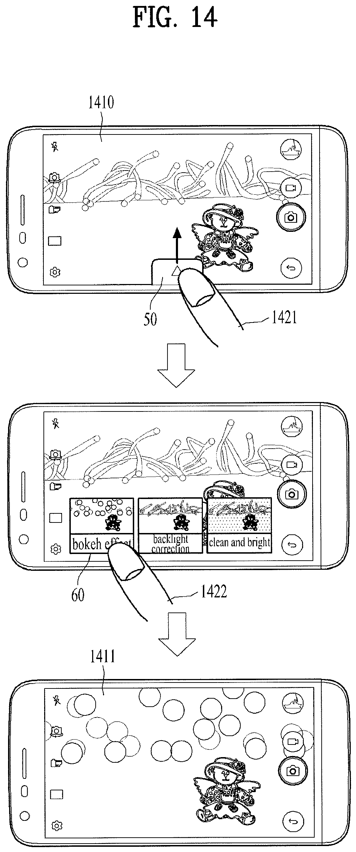

FIG. 14 is a diagram for a further different example of capturing an image when a general capturing button is outputted in a camera preview of a mobile terminal according to one embodiment of the present invention.

More specifically, an embodiment of FIG. 14 shows a case of capturing an image by setting a bokeh effect to a subject included in a camera preview. The bokeh effect corresponds to an effect that a center of an image is clearly outputted and an edge of the image shows a delicate light by applying light balls to the edge. Explanation on contents overlapped with the aforementioned contents of FIGS. 12 and 13 is omitted in the embodiment of FIG. 14.

First of all, referring to the first drawing of FIG. 14, the mobile terminal can output a first camera preview 1410 and a general capturing button 10. And, the mobile terminal can output a setting cue 50 at one side of the first camera preview 1410. In this case, the setting cue 50 can be outputted on the display unit only when an effect appropriate for a subject to which a focus area is set is provided.

And, the mobile terminal can sense a first input signal 1421 inputted on the setting cue 50. In this case, the first input signal 1421 is identical to the first input signal mentioned earlier in FIG. 13. In this case, as shown in the second drawing of FIG. 14, the mobile terminal can output a list of setting items 60 at one area of the first camera preview 1410. According to the embodiment of FIG. 14, the list of setting items 60 can include settings capable of being applied to a case that an image including such a moving light source as firework, night view and the like is captured.

And, the mobile terminal can sense a second input signal 1422 inputted on one setting item among the list of setting items 60. For example, the second input signal 1422 may correspond to a setting for a bokeh effect. In this case, as shown in the third drawing of FIG. 14, the mobile terminal can output a second camera preview 1411. In this case, the second camera preview may correspond to a preview image that a bokeh effect selected by a user is reflected to the first camera preview 1410.

And, although it is not depicted in FIG. 14, the mobile terminal can sense an additional input signal inputted on the general capturing button in a state that the second camera preview 1411 is outputted. In this case, the mobile terminal can capture and store an image corresponding to the second camera preview 1411.

In particular, according to the aforementioned embodiments, when an image including such a light source as firework, candle light night view, and the like is captured, it may be able to provide an image to which a professional setting is applied not by a professional photographer but by a user of the mobile terminal. And, according to the aforementioned embodiment, when a moving light image is captured, it may be able to obtain an image in which an analog particle effect is included without post processing.

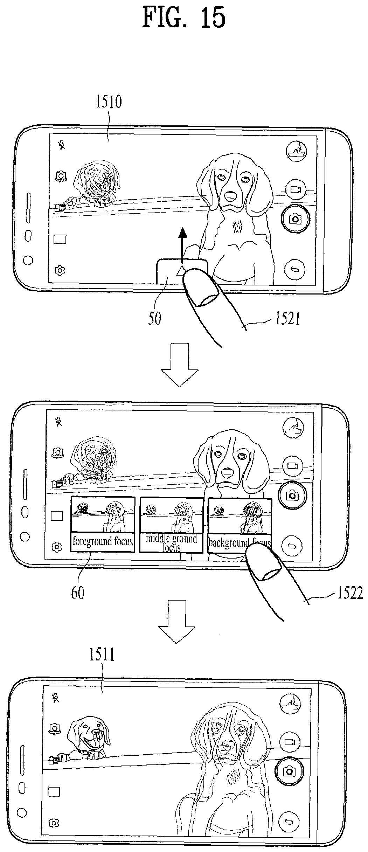

FIG. 15 is a diagram for a further different example of capturing an image when a general capturing button is outputted in a camera preview of a mobile terminal according to one embodiment of the present invention.

More specifically, an embodiment of FIG. 15 shows a case of capturing an image based on various shots focused on a plurality of subjects using a plurality of cameras installed in the rear side of the mobile terminal. Explanation on contents overlapped with the aforementioned contents of FIGS. 12 and 13 is omitted in the embodiment of FIG. 15.

First of all, referring to the first drawing of FIG. 15, the mobile terminal can output a first camera preview 1510 and a general capturing button 10. And, the mobile terminal can output a setting cue 50 at one side of the first camera preview 1510.

And, the mobile terminal can sense a first input signal 1521 inputted on the setting cue 50. In this case, as shown in the second drawing of FIG. 15, the mobile terminal can output a list of setting items 60 at one area of the first camera preview 1510. According to the embodiment of FIG. 15, the list of setting items 60 can include an item capable of setting a focus area to each of a plurality of subjects included in the camera preview. For example, the list of setting items 60 can include a foreground focus, a middle ground focus, and a background focus.

And, the mobile terminal can sense a second input signal 1522 inputted on one setting item among the list of setting items 60. For example, the second input signal 1522 may correspond to a setting for a background focus. In this case, as shown in the third drawing of FIG. 15, the mobile terminal can output a second camera review 1511. In this case, the second camera preview 1511 may correspond to a preview image that a background focus selected by a user is reflected to the first camera preview 1510.

And, although it is not depicted in FIG. 15, the mobile terminal can sense an additional input signal (not depicted) inputted on the general capturing button 10 in a state that the second camera preview 1511 is outputted. The mobile terminal can capture and store an image corresponding to the second camera preview 1511 in response to the additional input signal.

According to the aforementioned embodiment, it may be able to conveniently change a focus in a screen without controlling a separate aperture. In particular, it may be able to differently apply a focus of a foreground/middle ground/background using a depth difference of a plurality of camera lenses installed in the rear side of the mobile terminal.

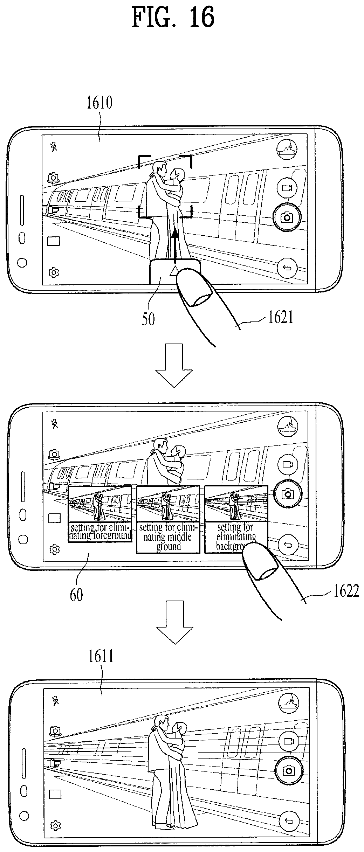

FIG. 16 is a diagram for a further different example of capturing an image when a general capturing button is outputted in a camera preview of a mobile terminal according to one embodiment of the present invention.

More specifically, an embodiment of FIG. 16 shows a case of capturing a movement of a subject using a plurality of cameras installed in the rear side of the mobile terminal. Explanation on contents overlapped with the aforementioned contents of FIG. 13 is omitted in the embodiment of FIG. 16. In the embodiment of FIG. 16, assume that a plurality of the cameras are identical to the cameras 121b/121c of FIG. 2.

First of all, referring to the first drawing of FIG. 16, the mobile terminal can output a first camera preview 1610 and a general capturing button 10. And, the mobile terminal can output a setting cue 50 at one side of the first camera preview 1610.

And, the mobile terminal can sense a first input signal 1621 inputted on the setting cue 50. In this case, as shown in the second drawing of FIG. 16, the mobile terminal can output a list of setting items 60 at one area of the first camera preview 1610. And, according to the embodiment of FIG. 16, if a moving subject and a not moving subject are included in a camera preview, the list of setting items 60 can include an item for setting an effect to each of a plurality of subjects. For example, the list of setting items 60 can include an item for eliminating foreground, an item for eliminating middle ground, and an item for eliminating background.

And, the mobile terminal can sense a second input signal 1622 inputted on one setting item among the list of setting items 60. For example, the second input signal 1622 may correspond to a setting for eliminating background. In this case, as shown in the third drawing of FIG. 16, the mobile terminal can output a second camera preview 1611. In this case, the second camera preview may correspond to a preview image that a background focus selected by a user is reflected to the first camera preview 1610. According to the embodiment of FIG. 16, the mobile terminal can configure a shutter speed of a first camera installed in the rear side to be fast and can configure a shutter speed of a second camera installed in the rear side to be slow.

And, although it is not depicted in FIG. 16, the mobile terminal can sense an additional input signal (not depicted) inputted on the general capturing button 10 in a state that the second camera preview 1611 is outputted. The mobile terminal can capture and store an image corresponding to the second camera preview 1611 in response to the additional input signal. For example, the captured image may correspond to an image that an image captured by increasing the shutter speed of the first camera and an image captured by reducing the shutter speed of the second camera are combined with each other.

According to the aforementioned embodiment, it may be able to differently set a shutter speed to each of a plurality of subjects to check an image of which a movement of a subject is recognizable via a preview in advance and may be then able to capture the image. And, according to the aforementioned embodiment, it may be able to quickly obtain an emotional picture of high quality without performing retouching.

Camera setting option provided according to information sensed by mobile terminal

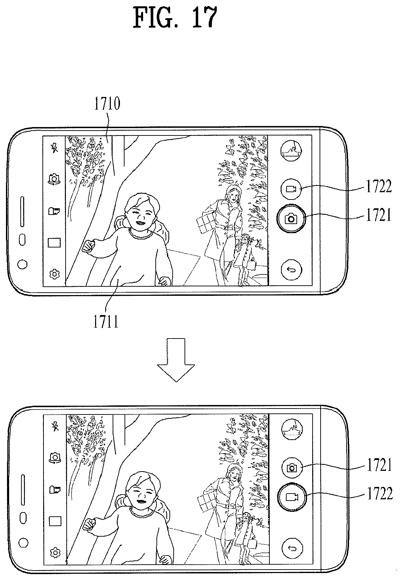

In the following embodiments of FIGS. 17 to 27, various methods of providing a camera setting option based on information on a subject included in a camera preview and information sensed by a mobile terminal are explained.

FIG. 17 is a diagram for an example of providing a camera setting based on a situation sensed by a mobile terminal according to one embodiment of the present invention.

More specifically, an embodiment of FIG. 17 shows a method of differently providing a capturing button based on a movement of a subject included in a camera preview.

First of all, referring to the first drawing of FIG. 17, the mobile terminal can output a camera preview 1710 when a camera application is executed. And, the camera preview 1710 can include a subject 1711. And, the mobile terminal can output an image capturing button 1721 and a video capturing button 1722 at an area adjacent to the camera preview 1710. For example, in a default state that the camera application is executed, the image capturing button 1721 is outputted at the center as a main and the video capturing button 1722 can be outputted as a sub.

Meanwhile, in the embodiment of FIG. 17, the subject 1711 included in the preview may correspond to a moving person. In this case, if the movement of the subject 1711 is sensed, the mobile terminal determines that it is difficult to capture a still image and may be able to recommend video capturing. In this case, as shown in the second drawing of FIG. 17, the mobile terminal outputs the video capturing button 1722 at the center as a main and outputs the image capturing button 1721 as a sub.

And, although it is not depicted in FIG. 17, if the movement of the subject 1711 included in the preview exceeds a predetermined rage, the mobile terminal can differently output a graphic effect of the video capturing button 1722. For example, the mobile terminal can output the video capturing button 1722 by magnifying a size of the video capturing button 1722. And, for example, the mobile terminal can output the video capturing button 1722 by emphasizing on a color of the video capturing button 1722.

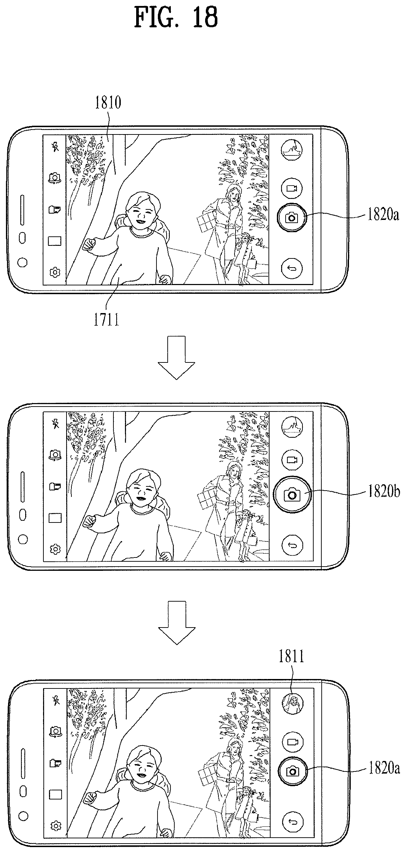

FIG. 18 is a diagram for a different example of providing a camera setting based on a situation sensed by a mobile terminal according to one embodiment of the present invention.

More specifically, an embodiment of FIG. 18 shows a method of differently providing a capturing button based on a movement of a subject included in a camera preview in a situation that a user executes a camera application in a hurry.

First of all, referring to the first drawing of FIG. 18, the mobile terminal can output a camera preview 1810 when a camera application is executed. And, the mobile terminal can output a first image capturing button 1820a at an area adjacent to the camera preview 1810.

And, the mobile terminal senses a current status and may be then able to change a camera capturing option. As an example, referring to the embodiment of FIG. 18, the mobile terminal can sense shaking of the mobile terminal. For example, the shaking of the mobile terminal may correspond to a case that a user intends to capture an image using the mobile terminal in a hurry. As a different example, the mobile terminal can execute the camera application using a shortcut menu. For example, the use of the shortcut menu may correspond to a case that a user directly executes the camera application without unlocking the lock of the mobile terminal. In particular, an intention of the user is to quickly capture an image.

In this case, as shown in the second drawing of FIG. 18, the mobile terminal can output a second image capturing button 1820a. In this case, the second image capturing button 1820a corresponds to a button for capturing a still image of a type identical to a type of the first image capturing button 1820a. The second image capturing button may have a size magnified from a size of the first image capturing button. When a user intends to quickly capture an image, the user may be able to easily capture an image using the second image capturing button.

And, the mobile terminal can sense an input signal 1830 inputted on the second image capturing button 1820b. In this case, the mobile terminal can capture and store an image corresponding to a camera preview. And, as shown in the third drawing of FIG. 18, the mobile terminal can output the first image capturing button 1820a again changed from the second image capturing button 1820b while outputting the camera preview again.

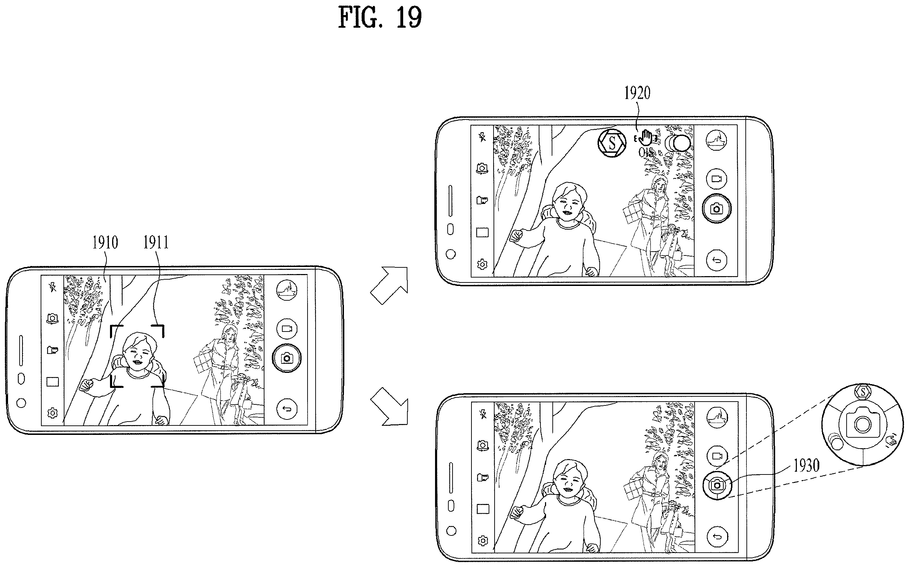

FIG. 19 is a diagram for a further different example of providing a camera setting based on a situation sensed by a mobile terminal according to one embodiment of the present invention.

More specifically, an embodiment of FIG. 18 shows a method of differently providing a capturing button based on a movement of a subject included in a camera preview.

First of all, referring to the first drawing of FIG. 19, the mobile terminal can output a camera preview 1910. And, the mobile terminal recognizes a subject included in the camera preview 1910, sets a focus area, and can control an indicator 1911 to be outputted in the focus area. For example, if the subject continuously moves, the mobile terminal can output the indicator 1911 by moving the indicator in accordance with the moving subject.

Subsequently, the mobile terminal can output a recommended capturing option based on the movement of the subject. As an example, referring to FIG. 19 (a), the mobile terminal can output a list of capturing options 1920 for capturing the moving subject at one side of the display unit. For example, the list of capturing options 1920 can include a quick shutter speed option, an OIS (optical image stabilization) option, a continuous shot option, and the like.

As a different example, referring to FIG. 19 (b), the mobile terminal can output a variable capturing button 1930 instead of a general capturing button. In this case, setting items included in the variable capturing button 1930 may be identical to at least a part of the setting items 1920 outputted in FIG. 19 (b). Of course, the contents mentioned earlier in FIGS. 4 to 11 can be applied to the contents related to the variable capturing button 1930.

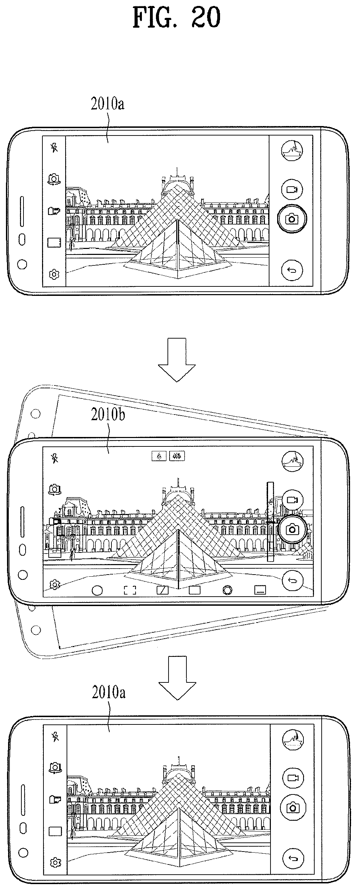

FIG. 20 is a diagram for a further different example of providing a camera setting based on a situation sensed by a mobile terminal according to one embodiment of the present invention.

More specifically, an embodiment of FIG. 20 shows a method of outputting a camera preview by changing the camera preview based on a capturing status sensed via the camera preview. And, in the embodiment of FIG. 20, assume that the mobile terminal is able to use both an image sensed by a general camera installed in the rear side of the mobile terminal and an image sensed by a wide angle camera.

First of all, referring to the first drawing of FIG. 20, the mobile terminal can output a first camera preview 2010a on the display unit. And, a size of the first camera preview 2010a can be outputted according to a default setting. In this case, the mobile terminal can determine a capturing status by analyzing the first camera preview 2010a. In the embodiment of FIG. 20, the mobile terminal may be in a status of capturing a scene located at the front of the mobile terminal. Meanwhile, in the embodiment of FIG. 20, the mobile terminal can sense location information of the mobile terminal while the first camera preview 2010a is outputted. And, the mobile terminal may determine the capturing status based on the location information of the mobile terminal.

In this case, as shown in the second drawing of FIG. 20, the mobile terminal can output a second camera preview 2010b based on the determined capturing status. In this case, the second camera preview 2010b senses the first camera preview corresponding to a default setting with a wider angle area and outputs the sensed preview to the whole screen of the display unit. For example, the first camera preview 2010a corresponds to an image sensed by a general camera of the mobile terminal and the second camera preview 2010b may correspond to an image sensed by a wide angle camera of the mobile terminal. And, for example, although both the first camera preview 2010a and the second camera preview 2010b correspond to images sensed by the same camera, the images may correspond to images different from each other in a picture ratio such as 4:3 and 16:9.

However, a user may intend to capture the image sensed by the general camera rather than the preview image of a wide angle outputted to the second camera preview 2010b. In this case, the user may shake the mobile terminal in left and right direction. And, the mobile terminal can sense a gesture input for rotating or shaking the mobile terminal in left and right direction. In this case, as shown in the third drawing of FIG. 20, the mobile terminal can output the first camera preview 2010a again. In particular, the mobile terminal can output the image sensed by the general camera again. And, the mobile terminal can output a camera preview again with a screen ratio of 4:3.

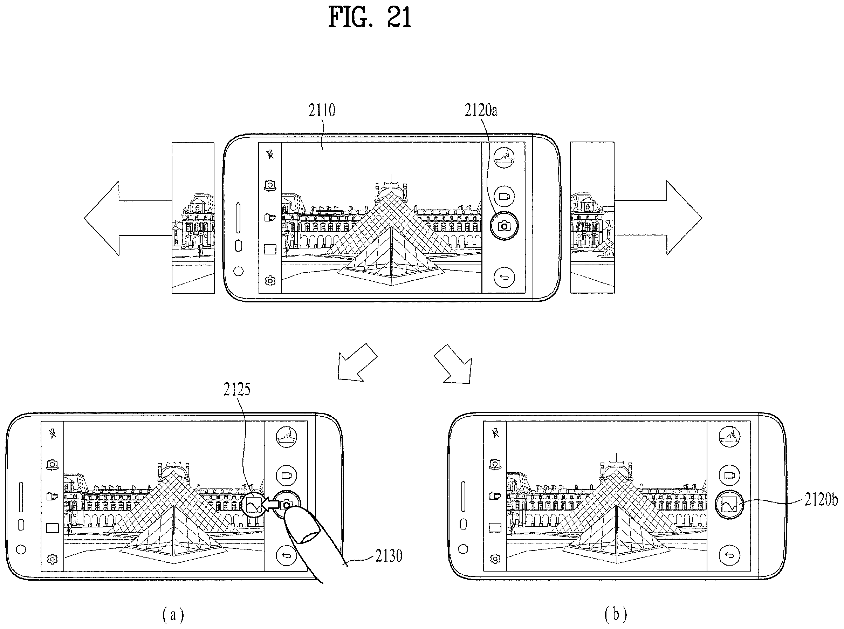

FIG. 21 is a diagram for a further different example of providing a camera setting based on a situation sensed by a mobile terminal according to one embodiment of the present invention.

More specifically, an embodiment of FIG. 21 shows a method of providing a panorama mode by identifying a capturing status of a panorama image or an intention in the mobile terminal.

First of all, referring to the first drawing of FIG. 21, the mobile terminal can output a camera preview 2110 and a default capturing button 2120a on the display unit. In this case, a user can rotate the mobile terminal in left and right direction. In this case, the mobile terminal can identify an intention of the user intending to capture a panorama image based on the movement of the mobile terminal.

Meanwhile, the mobile terminal can sense not only the movement of the mobile terminal but also location information of the mobile terminal. Referring to the embodiment of FIG. 21, the mobile terminal can be used at such a location as a mountain, a beach, and the like.

Subsequently, the mobile terminal can provide a panorama setting based on a movement of the mobile terminal. As an example, referring to FIG. 21 (a), the mobile terminal can output a panorama setting item 2125 at one side of the default capturing button 2120a in a form of an icon. Although it is not depicted in FIG. 21, if a drag touch input dragged from the default setting button 2120a to the panorama setting item 2125 is sensed, the mobile terminal can switch a mode into a panorama mode.

As a different example, referring to FIG. 21 (b), the mobile terminal can control a panorama capturing button 2120b to be outputted on the display unit instead of the default capturing button 2120a. In this case, although it is not depicted in FIG. 21, if an input signal inputted on the panorama capturing button 2120b is sensed, the mobile terminal can output a panorama image interface.

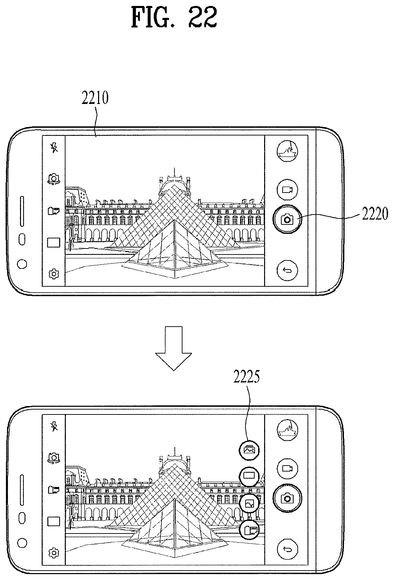

FIG. 22 is a diagram for a further different example of providing a camera setting based on a situation sensed by a mobile terminal according to one embodiment of the present invention.

More specifically, an embodiment of FIG. 22 shows a method of providing a recommended capturing option based on information on a subject included in a camera preview.

First of all, referring to the first drawing of FIG. 22, the mobile terminal can output a camera preview 2210 and a general capturing button 2220 on the display unit. In this case, the mobile terminal can determine a capturing status of a user based on the camera preview 2210.

In this case, as shown in the second drawing of FIG. 22, the mobile terminal can output recommended setting items 2225 at one side of the general capturing button 2220. For example, the recommended setting items 2225 can include 360° panorama, general panorama, filter, HDR, and the like. And, although it is not depicted in FIG. 22, if an input signal is inputted on one of the recommended setting items 2225, the mobile terminal can output an interface corresponding to the selected item.

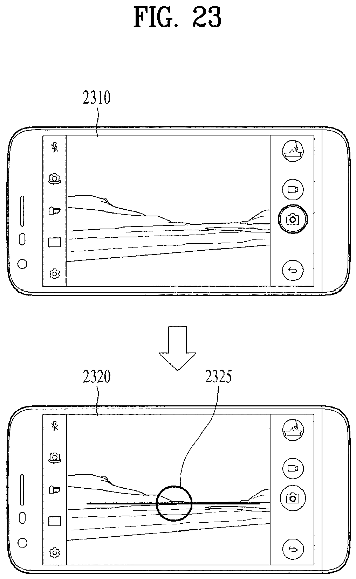

FIG. 23 is a diagram for a further different example of providing a camera setting based on a situation sensed by a mobile terminal according to one embodiment of the present invention.

More specifically, an embodiment of FIG. 23 shows a method of outputting a horizontal indicator based on a camera view.

First of all, referring to the first drawing of FIG. 23, the mobile terminal can output a camera preview 2310 on the display unit. In this case, the mobile terminal can determine an image sensed by a camera as a landscape capturing.

In this case, as shown in the second drawing of FIG. 23, the mobile terminal can output a horizontal indicator 2325. In this case, the horizontal indicator 2325 can be outputted in various ways. According to the embodiment of FIG. 23, a horizontal level can be expressed based on a position of a circle. For example, if the circle is positioned at the center of the indicator, a landscape image outputted through the camera preview can be recognized as in a horizontal state. By doing so, it may be able to induce the mobile terminal to stably capture an image in accordance with horizontal line.

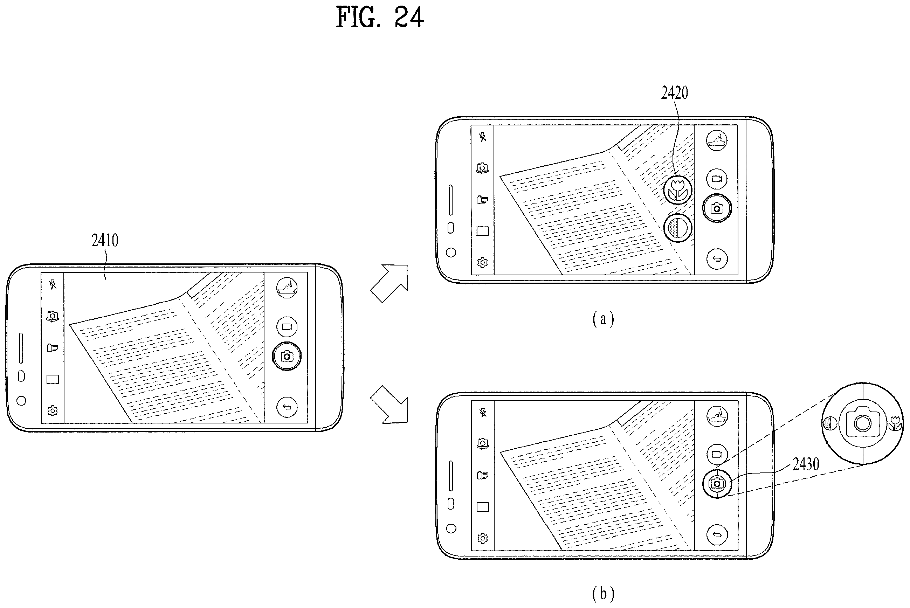

FIG. 24 is a diagram for a further different example of providing a camera setting based on a situation sensed by a mobile terminal according to one embodiment of the present invention.

More specifically, an embodiment of FIG. 24 shows a method of providing a close-up mode based on a camera preview.

First of all, referring to the first drawing of FIG. 24, the mobile terminal can output a camera preview 2410 on the display unit. In this case, the mobile terminal can identify a type of a subject by analyzing an image in the camera preview. For example, referring to the embodiment of FIG. 24, the mobile terminal can identify a book captured by a camera based on the camera preview.

Subsequently, the mobile terminal can provide a mode for clearly capturing the book included in the camera preview. As an example, referring to FIG. 24 (a), the mobile terminal can output a book capturing item 2420 at one side of a general capturing button. For example, the book capturing item 2420 can include a close-up shot item, a color contrast item, and the like. As a different example, referring to FIG. 24 (b), the mobile terminal can output a variable capturing button 2430 changed from the general capturing button. Setting items included in the variable capturing button 2430 may be identical to at least a part of the book capturing item 2420 of FIG. 24 (a).

Meanwhile, although it is not depicted in FIG. 24, the mobile terminal recognizes a text from a captured image, converts the text into a document file, and may be then able to store the document file in a memo application.

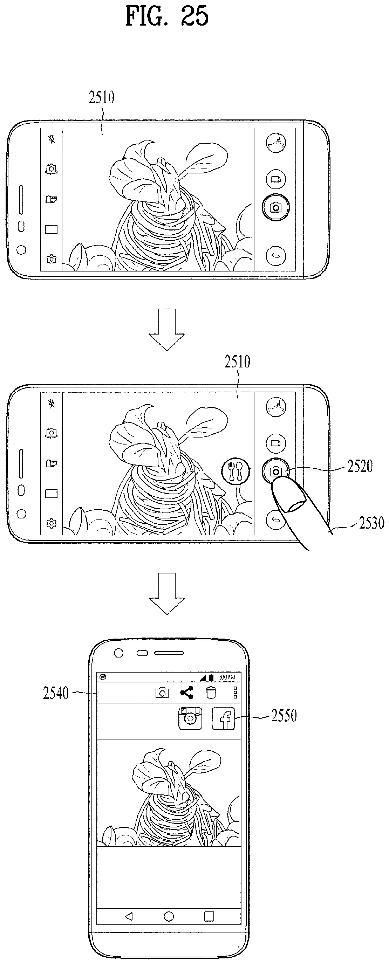

FIG. 25 is a diagram for a further different example of providing a camera setting based on a situation sensed by a mobile terminal according to one embodiment of the present invention.

More specifically, an embodiment of FIG. 25 shows a method of providing a food capturing mode based on information on a subject included in a camera preview.

First of all, referring to the first drawing of FIG. 25, the mobile terminal can output a camera preview 2510 on the display unit. In this case, the mobile terminal can identify a type of a subject by analyzing an image included in the camera preview. For example, according to the embodiment of FIG. 25, the mobile terminal can identify a food captured by a camera based on the camera preview.

Subsequently, the mobile terminal can provide a mode for clearly capturing the food included in the camera preview. For example, as shown in the second drawing of FIG. 25, the mobile terminal can output a food capturing item 2525 at one side of a general capturing button 2520. And, although it is not depicted in FIG. 25, if an input signal (not depicted) inputted on the food capturing item 2525 is sensed, the mobile terminal can output a preview image in a manner of making a color of a food subject to be vivid and making a background to be blurred.

In this case, the mobile terminal can sense an input signal 2530 inputted on the general capturing button 2520. In this case, the mobile terminal can capture and store an image to which a food mode is applied. The mobile terminal outputs the captured image 2540 on the display unit and may be able to output a share item 2550. In this case, the share item 2550 may correspond to an application link capable of sharing the image. Although it is not depicted in FIG. 25, if an input signal inputted on the share item 2550 is sensed, the mobile terminal can immediately transmit the captured image 2540 to an application capable of sharing the image.

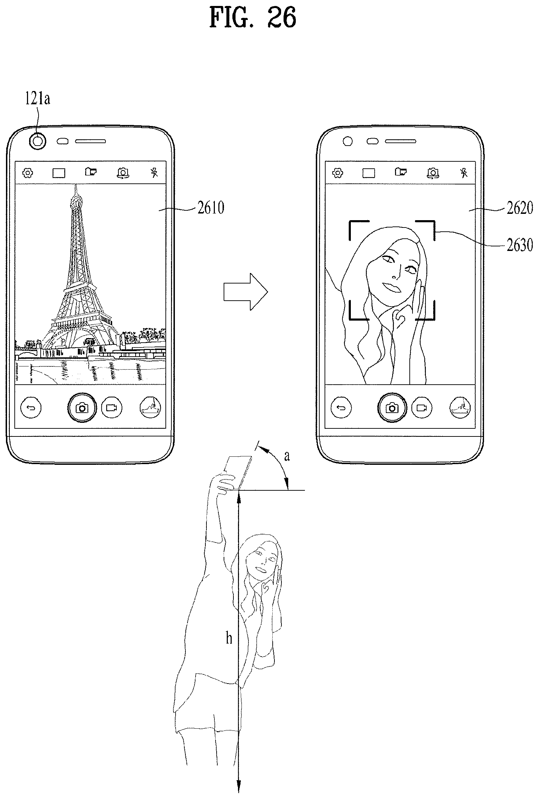

FIG. 26 is a diagram for a further different example of providing a camera setting based on a situation sensed by a mobile terminal according to one embodiment of the present invention.

More specifically, FIG. 26 shows a method of automatically switching a mode into a front camera mode under a specific condition of the mobile terminal. In an embodiment of FIG. 26, assume that both cameras installed in the front and the rear sides of the mobile terminal are in an activated state or a semi-activated state.

Referring to the first drawing of FIG. 26, the mobile terminal can output a first camera preview 2610. This may correspond to a case that a camera application is executed and an image sensed by the rear camera is outputted by default. In this case, the mobile terminal can sense a current status. According to the embodiment of FIG. 26, the mobile terminal is located at a height h with an angle a. In this case, although the image sensed by the rear camera (not depicted) is outputted in the camera view of the mobile terminal, the front camera 121 a may be in a state capable of recognizing the contour of a face of a person. In this case, the mobile terminal can recognize the current state as a state that a user intends to make a selfie using the front camera 121a.

Hence, as shown in the second drawing of FIG. 26, the mobile terminal can output a second camera preview 2620 sensed by the front camera 121 a. And, the mobile terminal can output an indicator 2630 to indicate that a person is recognized.

According to the aforementioned embodiments, a user can easily and automatically make a selfie without manually switching between the front camera and the rear camera.

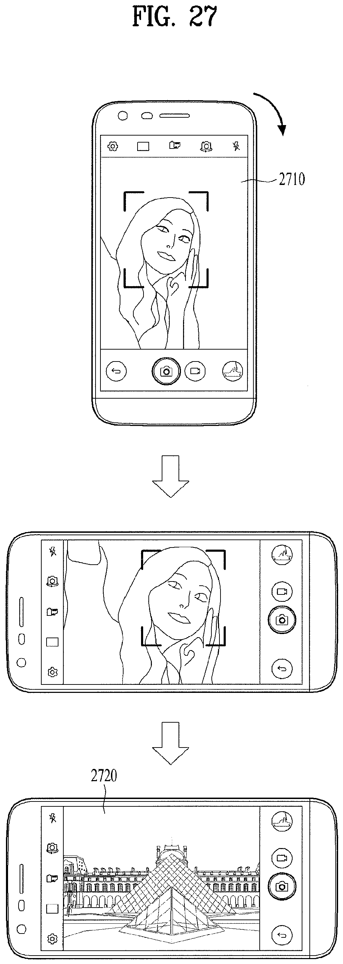

FIG. 27 is a diagram for a further different example of providing a camera setting based on a situation sensed by a mobile terminal according to one embodiment of the present invention.

More specifically, an embodiment of FIG. 27 corresponds to the embodiment connected with the second drawing of FIG. 26. The embodiment of FIG. 27 shows a method of providing an image sensed by a rear camera to a camera preview again.

Referring to the first drawing of FIG. 27, if a predetermined height range and a predetermined angle range are sensed and a face is recognized via a front camera, the mobile terminal can output an image sensed by the front camera through a first camera preview 2710. In this case, the mobile terminal may be in a portrait mode.

In this case, as shown in the second drawing of FIG. 27, the mobile terminal can sense a state that the portrait mode is switched to a landscape mode. In this case, the mobile terminal can determine it as a user intends to capture an image sensed by a rear camera.

Hence, as shown in the third drawing of FIG. 27, the mobile terminal can output the image sensed by the rear camera through a second camera preview 2720 instead of the first camera preview 2710.

According to the aforementioned embodiment, a user can easily switch between the front camera and the rear camera without a manual operation.

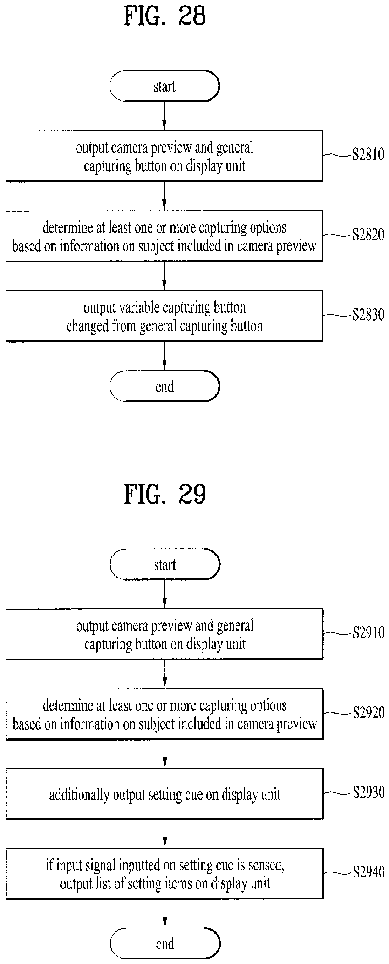

FIG. 28 is a flowchart for a method of controlling a mobile terminal according to one embodiment of the present invention.

First of all, the mobile terminal can output a camera preview and a general capturing button on the display unit [S2810]. In this case, the general capturing button may correspond to a capturing button outputted by default when a camera application is executed.

Subsequently, the mobile terminal can determine at least one or more capturing options based on information on a subject included in the camera preview [S2820].

Subsequently, the mobile terminal can output a variable capturing button changed from the general capturing button [S2830]. As an example, as mentioned earlier in FIGS. 4 to 11, the variable capturing button can include at least one or more option areas and the general capturing button. And, the at least one or more option areas can be deployed in a form of surrounding the general capturing button. As a different example, as mentioned earlier in FIGS. 17 and 21, the variable capturing button can be outputted to an area at which the general capturing button is located based on at least one selected from the group consisting of information on a subject included in the camera preview, movement information of the mobile terminal, and location information of the mobile terminal.

FIG. 29 is a flowchart for a method of controlling a mobile terminal according to one embodiment of the present invention.

First of all, the mobile terminal can output a camera preview and a general capturing button on the display unit [S2910].

Subsequently, the mobile terminal can determine at least one or more capturing options based on information on a subject included in the camera preview [S2920].

And, the mobile terminal can additionally output a setting cue on the display unit based on the determined at least one or more capturing options [S2930]. In this case, the setting cue can be outputted only when at least one or more capturing options exist.

In this case, if an input signal inputted on the setting cue is sensed, the mobile terminal can output a list of setting items on the display unit [S2940].

Moreover, for clarity, although each drawing is explained in a manner of being divided, embodiments described for each drawing can be combined with each other to implement a new embodiment.

And, as mentioned in the foregoing description, a voice text conversion display device and a method of controlling therefor are not restricted by the configuration and the method of the embodiments. In order to make various modifications from the embodiments, all or a part of each embodiment can be configured in a manner of being selectively combined.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal. The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments. As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A mobile terminal, comprising:
a display unit;
a sensing unit; and
a controller, the controller, if a camera application is executed, configured to output a camera preview and a general capturing button on the display unit, the controller configured to determine one or more capturing options based on information on a subject contained in the camera preview, the controller further configured to control a variable capturing button to be outputted in a manner of being changed from the general capturing button based on the one or more determined capturing options.

2. The mobile terminal of claim 1, wherein the variable capturing button comprises one or more option areas and the general capturing button and wherein the one or more option areas are deployed in a form of surrounding the general capturing button.

3. The mobile terminal of claim 2, wherein the controller is configured to output the variable capturing button containing the one or more option areas in a manner of being changed from the general capturing button based on the one or more determined capturing options and wherein the one or more option areas correspond to the one or more determined capturing options.

4. The mobile terminal of any one preceding claim, wherein the controller is configured to capture an image corresponding to the camera preview when an input signal to the variable capturing button is sensed.

5. The mobile terminal of claim 4, wherein the one or more determined capturing options correspond to one or more camera settings which are available for the controller in capturing an image corresponding to the camera preview.

6. The mobile terminal of claim 4 or 5, wherein the controller is configured to capture an image corresponding to the camera preview without applying any of the one or more determined capturing options if the input signal is a first touch input signal of a predefined maximum temporal touch duration.

7. The mobile terminal of claim 6, wherein the controller is configured to capture one or more images based on the camera preview by applying a respective one of the one or more capturing options for each image if the input signal is a second touch input signal of a longer temporal touch duration than the first touch input signal.

8. The mobile terminal of claim 7, wherein the number of captured images increases as the temporal duration of the second touch input signal increases.

9. The mobile terminal of claim 7 or 8, wherein the controller is configured to sequentially capture an image based on the camera preview for each of the determined capturing options if the input signal is a press input signal that is input with a larger touch pressure than the first and second touch input signals.

10. The mobile terminal of claim 9, wherein if the image capturing is completed, the controller is further configured to eliminate the variable capturing button from the display unit and output the general capturing button on the display unit.

11. The mobile terminal of any one preceding claim, wherein the variable capturing button is outputted to an area in which the general capturing button is located based on at least one selected from the group consisting of the information on the subject contained in the first camera preview, movement information of the mobile terminal, and location information of the mobile terminal.

12. A method of controlling a mobile terminal, comprising the steps of:
if a camera application is executed, outputting a camera preview and a general capturing button on a display unit;
determining one or more capturing options based on information on a subject contained in the first camera preview; and
controlling a variable capturing button to be outputted in a manner of being changed from the general capturing button based on the one or more determined capturing options.
